# EUROPEAN PATENT APPLICATION

(11) **EP 3 905 492 A1**
(43) Date of publication of application: **03.11.2021**
(21) Application number: 19902516.4
(22) Date of filing: 26.12.2019
(51) Int. Cl.: H02K 15/02, H02K 1/18, H02K 1/22

(54) **LAMINATED IRON CORE AND PRODUCTION METHOD FOR LAMINATED IRON CORE**

(30) Priority: 28.12.2018 JP 2018248037
(71) Applicant: NHK Spring Co., Ltd., Kanagawa 236-0004 (JP); NISSAN MOTOR Co., Ltd., Yokohama-shi, Kanagawa 221-0023 (JP); Renault S.A.S., 92100 Boulogne-Billancourt (FR)
(72) Inventor: ANDO, Shuji, Yokohama-shi, Kanagawa 236-0004 (JP); JIN, Yuichiro, Yokohama-shi, Kanagawa 236-0004 (JP); SEKI, Kazuaki, Yokohama-shi Kanagawa 221-0023 (JP); INUZUKA, Kenta, Yokohama-shi Kanagawa 221-0023 (JP)
(74) Representative: DREISS Patentanwälte PartG mbB
(86) International application number: PCT/JP2019/051312
(87) International publication number: WO 2020/138372

(57) **Abstract**

A laminated iron core (10) includes a ring-shaped iron core piece (14) configured by arranging magnetic circular arc-shaped iron core pieces (12) in a ring shape, and a laminated iron core body (16) formed by laminating plural of the ring-shaped iron core pieces (14). In the laminated iron core (10), a first weld portion (18A) is provided at the laminated iron core body (16) so as to run along a lamination direction of the ring-shaped iron core pieces (14), and a second weld portion (18B) is provided at some of the plurality of ring-shaped iron core pieces (14) including a ring-shaped iron core piece (14) at an outermost layer. The second weld portion (18B) extends toward a lamination direction inside.

## Description

### Technical Field

The present invention relates to a laminated iron core and a laminated iron core manufacturing method.

### Background Art

Japanese Patent Application Laid-Open (JP-A) No. 2015-208066 discloses a laminated iron core formed by arranging plural circular arc-shaped iron core pieces in a ring shape to configure ring-shaped iron core pieces, laminating the ring-shaped iron core pieces so as to be phase-offset with respect to one another around a circumferential direction, and welding the ring-shaped iron core pieces together along a lamination direction.

### SUMMARY OF INVENTION

### Technical Problem

In the above-described laminated iron core, the ring-shaped iron core pieces at outermost layers of the laminated iron core are only joined to another layer on one side, unlike the ring-shaped iron core pieces at intermediate layers. Thus, the join strength provided by welding is only half the join strength provided by welding the ring-shaped iron core pieces at the intermediate layers.

When such a laminated iron core is used in a rotor or stator of a motor, depending on the usage environment the ring-shaped iron core pieces at the outermost layers may shift or detach from the body of the laminated iron core. Although additional welding of the ring-shaped iron core pieces at the outermost layers is a conceivable solution to this issue, depending on the welding method, so doing may cause the resultant weld portions to project out from the laminated iron core body.

In consideration of the above circumstances, an object of the present invention is to obtain a laminated iron core that suppresses an iron core piece from shifting or detaching without causing a weld portion to project out.

### Solution to Problem

A laminated iron core according to a first aspect of the present invention includes a ring-shaped iron core piece configured by arranging magnetic circular arc-shaped iron core pieces in a ring shape, a laminated iron core body formed by laminating plural of the ring-shaped iron core pieces, a first weld portion provided at the laminated iron core body so as to run along a lamination direction of the ring-shaped iron core pieces, and a second weld portion provided at some of the ring-shaped iron core pieces, including a ring-shaped iron core piece at an outermost layer, the second weld portion extending toward a lamination direction inside.

The laminated iron core according to the first aspect includes the first weld portion that joins the ring-shaped iron core pieces of the respective layers into an integral unit, and the second weld portion that joins together the ring-shaped iron core pieces of some layers, including the ring-shaped iron core piece at the outermost layer. The second weld portion extends from the ring-shaped iron core piece at the outermost layer toward the lamination direction inside. Providing the second weld portion in addition to the first weld portion in this manner enables the join strength to be increased at the ring-shaped iron core piece at the outermost layer of the laminated iron core body. Moreover, since the second weld portion is formed extending from the lamination direction outside toward the lamination direction inside, the second weld portion is suppressed from projecting out beyond an end face of the laminated iron core body. The first aspect is thus capable of enhancing the join strength of the ring-shaped iron core piece at the outermost layer and of suppressing shifting or detachment of the ring-shaped iron core pieces, without causing the weld portions to project out.

In a laminated iron core according to a second aspect of the present invention, configuration is made such that the second weld portion tapers on progression toward a lamination direction inside end portion of the second weld portion.

In the laminated iron core according to the second aspect, the second weld portion is formed so as to taper on progression toward the lamination direction inside end portion of the second weld portion, thus suppressing the second weld portion from projecting out beyond a circumferential face of the laminated iron core body to which the second weld portion is provided.

In a laminated iron core according to a third aspect of the present invention, configuration is made such that a lamination direction outside end portion of the second weld portion is positioned either at a same position as a lamination direction outside end face of the laminated iron core body, or at the lamination direction inside of the end face.

In the laminated iron core according to the third aspect, since the second weld portion does not create a location that projects out in the lamination direction of the laminated iron core body, the join strength of the ring-shaped iron core piece at the outermost layer can be enhanced while suppressing any reduction in assembly precision when assembling the laminated iron core configured from the laminated iron core body to a rotor shaft or the like.

In a laminated iron core according to a fourth aspect of the present invention, configuration is made such that an end portion of the second weld portion in a radial direction of the laminated iron core body is positioned either at a same position as a circle contacting a circumferential face on a side of the laminated iron core body where the second weld portion is provided, or further within the laminated iron core body than the circle.

In the laminated iron core according to the fourth aspect, since the second weld portion does not form a location that projects from the circumferential face of the laminated iron core body, the join strength of the ring-shaped iron core piece at the outermost layer can be enhanced while suppressing any reduction in assembly precision when assembling the laminated iron core configured from the laminated iron core body to a rotor shaft or the like.

A laminated iron core manufacturing method according to a fifth aspect of the present invention includes a laminating process of laminating plural ring-shaped iron core pieces to form a laminated iron core body while arranging magnetic circular arc-shaped iron core pieces in a ring shape to form the ring-shaped iron core pieces, a first welding process of welding the laminated iron core body along a lamination direction of the ring-shaped iron core pieces, and a second welding process of welding some of the ring-shaped iron core pieces, including a ring-shaped iron core piece at an outermost layer, from a lamination direction outside toward a lamination direction inside.

The laminated iron core manufacturing method according to the fifth aspect includes the first welding process of joining the ring-shaped iron core pieces of the respective layers into an integral unit, and the second welding process of joining together the ring-shaped iron core pieces of some layers, including the ring-shaped iron core piece at the outermost layer. In the second welding process, welding is performed from the ring-shaped iron core piece at the outermost layer toward the lamination direction inside. Performing the second welding process in addition to the first welding process in this manner enables the join strength to be increased at the ring-shaped iron core piece at the outermost layer of the laminated iron core body. Moreover, since a weld portion is formed extending from the lamination direction outside toward the lamination direction inside in the second welding process, the weld portion is suppressed from projecting out beyond an end face of the laminated iron core body. The fifth aspect is thus capable of enhancing the join strength of the ring-shaped iron core piece at the outermost layer and of suppressing shifting or detachment of the ring-shaped iron core pieces, without causing the weld portions to project out.

In a laminated iron core manufacturing method according to a sixth aspect of the present invention, in the second welding process, a welding heat input amount is reduced on progression toward the lamination direction inside.

In the laminated iron core manufacturing method according to the sixth aspect, in the second welding process the welding heat input amount is reduced on progression toward the lamination direction inside, thereby suppressing the weld portion from projecting out beyond a circumferential face of the laminated iron core body to which the weld portion is provided.

In a laminated iron core manufacturing method according to a seventh aspect of the present invention, in the second welding process, a direction of heat input to the laminated iron core body is tilted at an oblique angle relative to the lamination direction.

In the laminated iron core manufacturing method according to the seventh aspect, by for example tilting the processing head of a welding torch so as to perform welding with the direction of heat input set to an oblique angle, the next location to be welded can be preheated, thus enabling a wider weld bead and enhanced weld strength.

In a laminated iron core manufacturing method according to an eighth aspect of the present invention, the second welding process is performed on the ring-shaped iron core piece at the outermost layer on one out of two lamination direction sides, and the laminated iron core body is then inverted in the lamination direction, after which the second welding process is performed on the ring-shaped iron core piece at the outermost layer on the other out of the two lamination direction sides.

The laminated iron core manufacturing method according to the eighth aspect is capable of enhancing the join strength of the ring-shaped iron core pieces at the outermost layers on both lamination direction sides, and suppressing the ring-shaped iron core pieces from shifting or detaching.

### Advantageous Effects of Invention

The present invention is capable of suppressing an iron core piece from shifting or detaching without causing a projecting weld portion to project out.

### BRIEF DESCRIPTION OF DRAWINGS

Fig. 1 is a perspective view illustrating a laminated iron core according to an exemplary embodiment of the present invention.
Fig. 2 is an exploded perspective view illustrating partial configuration of a laminated iron core.
Fig. 3A is an enlarged plan view illustrating weld portions provided in a groove of a circular arc-shaped iron core piece.
Fig. 3B is an enlarged plan view illustrating meltable protrusions provided in a groove of a circular arc-shaped iron core piece.
Fig. 4A is a plan view illustrating a second weld portion of an exemplary embodiment.
Fig. 4B is a side view illustrating a second weld portion of an exemplary embodiment.
Fig. 4C is a cross-section taken along line X-X in Fig. 4B, illustrating a second weld portion of an exemplary embodiment.
Fig. 4D is a bottom view illustrating a second weld portion of an exemplary embodiment.
Fig. 5 is a perspective view illustrating a laminated iron core body laminated on an alignment jig.
Fig. 6 is a perspective view illustrating a situation in which a laminated iron core body is being welded in a welding process.
Fig. 7 is a cross-section illustrating a situation in which a laminated iron core body is being welded in a welding process.
Fig. 8A is a plan view illustrating a second weld portion of a comparative example.
Fig. 8B is a side view illustrating a second weld portion of a comparative example.
Fig. 8C is a cross-section taken along line Y-Y in Fig. 8B, illustrating a second weld portion of a comparative example.
Fig. 8D is a bottom view illustrating a second weld portion of a comparative example.

### DESCRIPTION OF EMBODIMENTS

Explanation follows regarding a laminated iron core and a manufacturing method thereof according to an exemplary embodiment of the present invention.

### Configuration of Laminated Iron Core

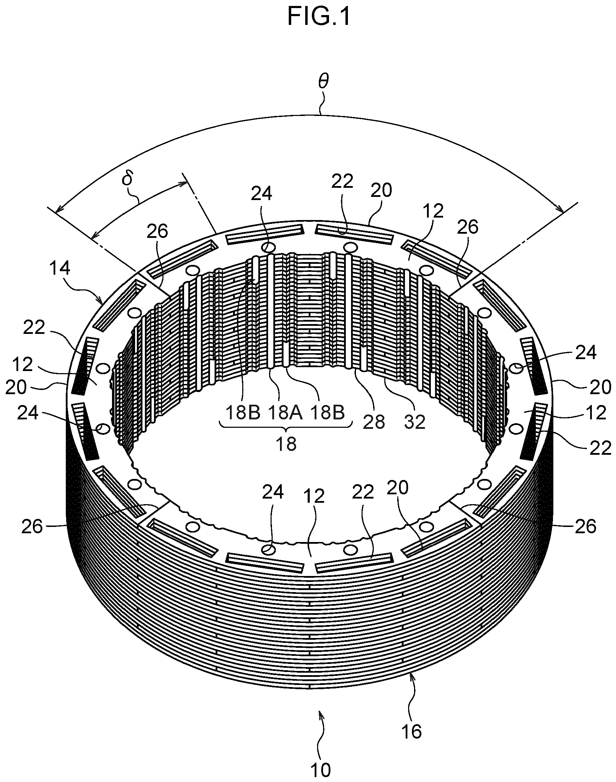

First, explanation follows regarding a laminated iron core 10 according to the present exemplary embodiment. The laminated iron core 10 is a laminated rotor core employed in the rotor of a vehicle drive motor (an electric motor), and is an element configuring a magnetic rotor. As illustrated in Fig. 1, plural ring-shaped iron core pieces 14, each configured by arranging four separate circular arc-shaped iron core pieces 12 (divided iron core pieces) in a ring shape, are laminated on one another to configure a laminated iron core body 16. The laminated iron core 10 is formed by integrating the laminated iron core body 16 using plural weld portions 18.

In the present exemplary embodiment, each of the circular arc-shaped iron core pieces 12 is made of magnetic sheet steel, and is set with a circular arc angle θ of 90°. Plural (four in this example) circular arc shaped magnet mounting portions 20 (magnetic pole pieces) arranged around a circumferential direction are formed at a circumferential outside of each of the circular arc-shaped iron core pieces 12. The magnet mounting portions 20 are each set with a circular arc angle δ of 22.5°, and a magnet mounting hole 22 for mounting a magnet is formed through each of the magnet mounting portions 20.

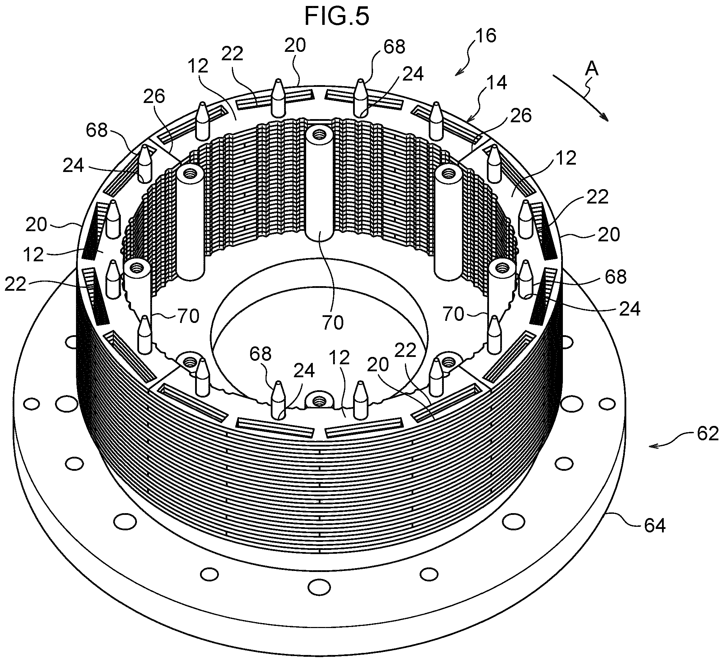

Moreover, plural (four in this example) circular guide holes 24 arranged around the circumferential direction are formed in a width direction intermediate portion (intermediate portion between the outer circumference and the inner circumference) of each of the circular arc-shaped iron core pieces 12. The guide holes 24 are pilot holes for insertion of guide pins 68 (see Fig. 5) that are provided to an alignment jig 62 employed when laminating the plural ring-shaped iron core pieces 14 and when welding the laminated iron core body 16.

The guide holes 24 and the magnet mounting portions 20 are respectively provided so as to be disposed at intervals of 22.5° in a state in which the circular arc-shaped iron core pieces 12 have been arranged in a ring shape to configure one of the ring-shaped iron core pieces 14. The guide holes 24 are provided in-phase with the magnet mounting portions 20 around the circumferential direction of the ring-shaped iron core piece 14.

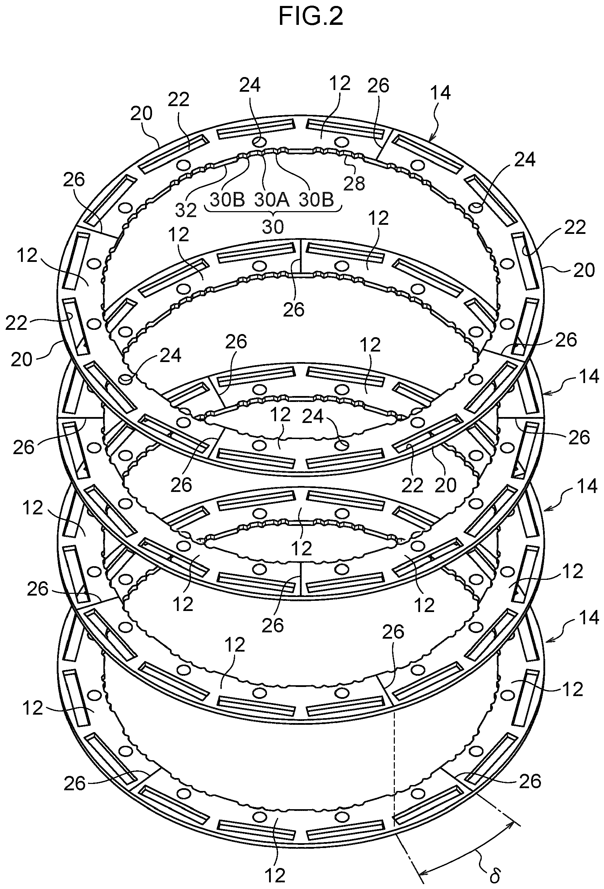

As illustrated in Fig. 2, the mutually overlapping ring-shaped iron core pieces 14 are laminated in a specific number of layers using a so-called bricklaying technique, in which circumferential direction joints 26 between the circular arc-shaped iron core pieces 12 are phase-offset with respect to each other around the circumferential direction. In the present exemplary embodiment, the phase-offset angle is set to 22.5°, this being the same as the circular arc angle δ of the magnet mounting portions 20.

By laminating the ring-shaped iron core pieces 14 with a phase-offset of 22.5°, the magnet mounting portions 20 and the guide holes 24 are disposed at intervals of 22.5°, such that the positions of the respective magnet mounting portions 20 and guide holes 24 are aligned along a lamination direction of the ring-shaped iron core pieces 14 (hereafter simply referred to as the lamination direction). The magnet mounting portions 20 and the guide holes 24 thus penetrate from one lamination direction end side to the other lamination direction end side of the laminated iron core body 16.

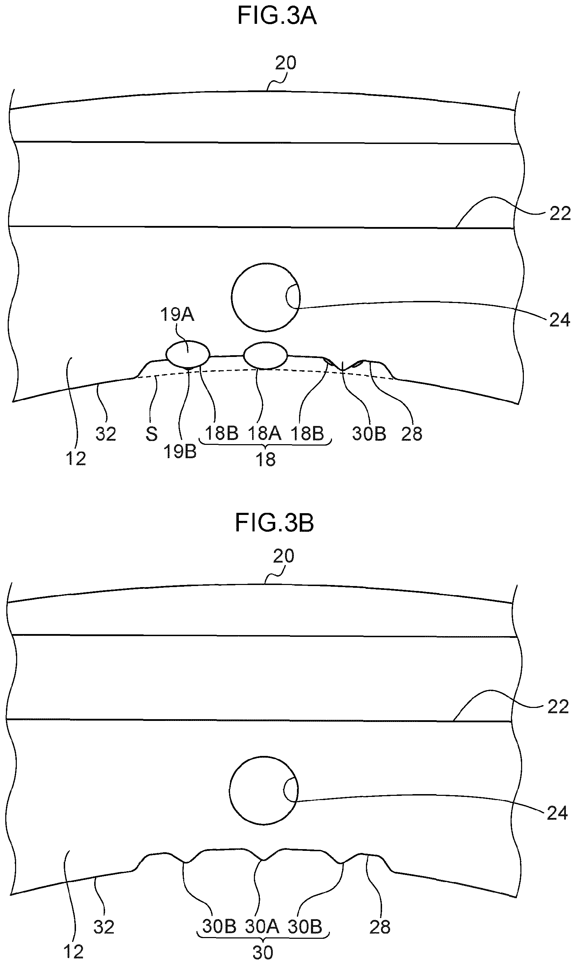

As illustrated in Fig. 1, the plural ring-shaped iron core pieces 14 that have been laminated as described above are joined together by the plural weld portions 18. The plural weld portions 18 are provided at a face on the opposite side of the guide holes 24 to the magnet mounting portions 20, namely, at the circumferential inside of the laminated iron core body 16. To explain in more detail, the respective weld portions 18 are provided in grooves 28 formed at the circumferential inside of the respective ring-shaped iron core pieces 14 at positions aligned with the guide holes 24. Each of the weld portions 18 include a linear first weld portion 18A running along the lamination direction of the laminated iron core body 16, and linear second weld portions 18B provided at some of the ring-shaped iron core pieces 14, including a ring-shaped iron core piece 14 at an outermost layer, and extending toward the lamination direction inside (see Fig. 3A).

Note that prior to providing the weld portions 18, plural meltable protrusions 30 are formed projecting out from each of the grooves 28. As illustrated in Fig. 3B, the meltable protrusions 30 include a first protrusion 30A provided at a central side of each of the corresponding groove 28 when viewed from above, and second protrusions 30B provided on both circumferential direction sides of the first protrusion 30A. The second protrusions 30B are each formed at a position offset by approximately 3° to 4° from the first protrusion 30A in plan view.

As illustrated in Fig. 1, plural of the first weld portions 18A are provided arranged around the circumferential direction at the circumferential inside of the laminated iron core body 16. In the present exemplary embodiment, the number of first weld portions 18A is the same as the number of magnetic poles provided at the laminated iron core body 16 (sixteen in this example). Namely, the first weld portions 18A are provided at intervals of 22.5° around the circumferential inside of the laminated iron core body 16. The first weld portions 18A are provided at positions corresponding to the first protrusions 30A, the first protrusions 30A being melted during formation of the first weld portions 18A, in other words during welding. The first weld portions 18A weld (join) together the respective layers of circular arc-shaped iron core pieces 12, which are phase-offset with respect to each other around the circumferential direction, along the lamination direction.

The second weld portions 18B are provided adjacent to the respective first weld portions 18A at the circumferential inside of the laminated iron core body 16. The same number of the second weld portions 18B as the number of first weld portions 18A (sixteen in this example) is provided at each lamination direction side (at an upper portion and a lower portion) of the laminated iron core body 16. Namely, the second weld portions 18B are provided at the circumferential inside of the laminated iron core body 16 at intervals of 22.5° at both the upper portion and the lower portion of the laminated iron core body 16. The second weld portions 18B are provided at positions corresponding to the second protrusions 30B, the second protrusions 30B corresponding to the second weld portions 18B being melted during formation of the second weld portions 18B, in other words during welding.

The second weld portions 18B at the upper portion of the laminated iron core body 16 are provided 3° to 4° counterclockwise from the respective first weld portions 18A in plan view. The second weld portions 18B at the lower portion of the laminated iron core body 16 are provided 3° to 4° clockwise from the respective first weld portions 18A in plan view. The second weld portions 18B extend for a length of several millimeters from the upper faces of the laminated iron core body 16 so as to weld (join) together plural (approximately ten in this example) of the ring-shaped iron core pieces 14, including the ring-shaped iron core pieces 14 of the outermost layers, along the lamination direction.

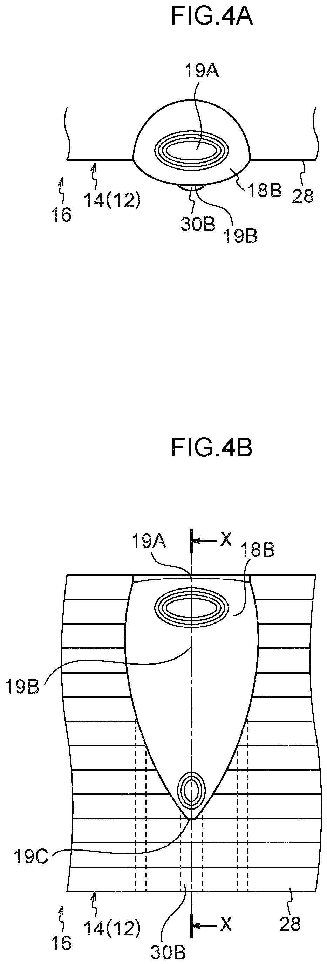

Fig. 4A to Fig. 4D are enlarged diagrams of one of the second weld portions 18B. In a welded state, the second weld portion 18B of the present exemplary embodiment has the following properties. Namely, as illustrated in Fig. 4B, the second weld portion 18B is formed so as to taper on progression toward a lower side end portion 19C at the lamination direction inside thereof.

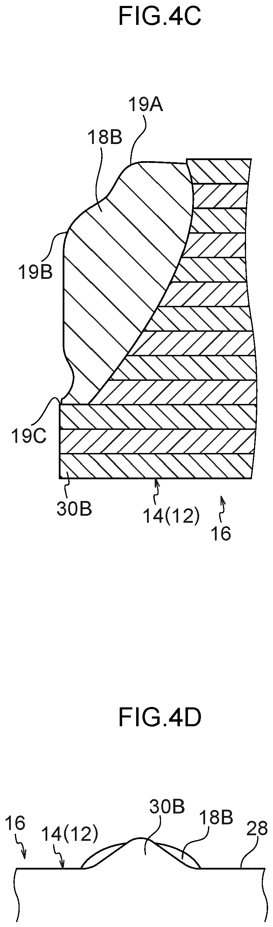

As illustrated in Fig. 4B and Fig. 4C, an upper side end portion 19A of the second weld portion 18B is positioned further toward the lamination direction inside than a lamination direction outside end face (upper face) of the laminated iron core body 16. Namely, the lamination direction outside end portion 19A of the second weld portion 18B is formed so as not to project out beyond the lamination direction outside end face (upper face) of the laminated iron core body 16.

As illustrated in Fig. 4A and Fig. 4D, the second weld portion 18B does not project out beyond the second protrusion 30B in either plan view or bottom view. As illustrated in Fig. 3A, an end portion 19B of the second weld portion 18B at a radial direction inside of the laminated iron core body 16 is positioned further within the laminated iron core body 16 than a circle S inscribed at an inner circumferential face 32 of the laminated iron core body 16. Namely, the radial direction inside end portion 19B of the second weld portion 18B is formed so as not to project out beyond the circle S inscribed at the inner circumferential face 32 of the laminated iron core body 16. Note that in the present exemplary embodiment, a radial direction inside end portion of the first weld portion 18A is also formed so as not to project out beyond the circle S inscribed at the inner circumferential face 32 of the laminated iron core body 16.

### Method of Manufacturing Laminated Iron Core

Next, explanation follows regarding a method of manufacturing the laminated iron core 10 with the above configuration.

The method of manufacturing the laminated iron core 10 is configured by: a pressing process, this being a first process; a laminating process, this being a second process; a welding process, this being a third process; and an inspection process, this being a fourth process.

In the pressing process, a strip shaped magnetic steel sheet is pressed by a die to manufacture a carrier-mounted single sheet (not illustrated in the drawings) in which plural of the circular arc-shaped iron core pieces 12 are coupled together by pairs of coupling portions. The manufactured carrier-mounted single sheet is wound onto a reel (not illustrated in the drawings), and then processing transitions to the laminating process.

In the laminating process, the circular arc-shaped iron core pieces 12 are sequentially cut out from the carrier-mounted single sheet as it is conveyed, after which the cutout circular arc-shaped iron core pieces 12 are arranged in ring shapes to form the ring-shaped iron core pieces 14, while laminating the plural ring-shaped iron core pieces 14 so as to be phase-offset with respect to one another around the circumferential direction in order to manufacture the laminated iron core body 16. Specifically, the circular arc-shaped iron core pieces 12 that have been cut out from the carrier-mounted single sheet 30 are placed on the alignment jig 62 (see Fig. 5) that is detachably attached to a turntable of an electric indexer (not illustrated in the drawings). As illustrated in Fig. 5, the alignment jig 62 includes a ring shaped lower plate 64, plural (sixteen in this example) of the guide pins 68 (pilot pins) that project out upward from the lower plate 64, and plural (eight in this example) support columns 70 that project out upward from the alignment jig 62. Note that the numbers of the guide pins 68 and the support columns 70 may be modified as appropriate.

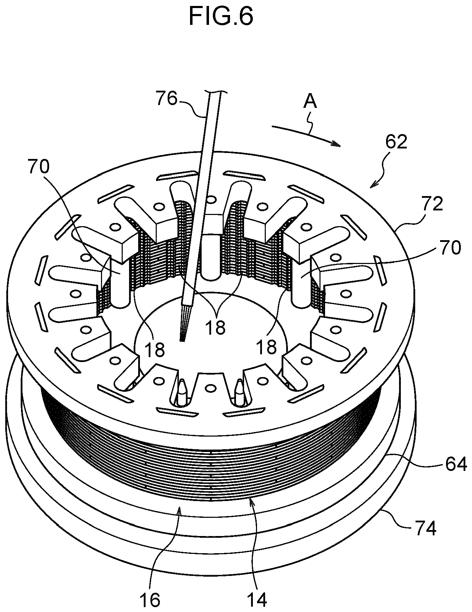

The sixteen guide pins 68 are arranged around the circumferential direction of the lower plate 64 at uniform spacings (at spacings of 22.5°) and securely fixed to the lower plate 64. The eight support columns 70, which are further to the circumferential inside of the lower plate 64 than the sixteen guide pins 68, are arranged around the circumferential direction of the lower plate 64 at uniform spacings (at spacings of 45°), and are securely fixed to the lower plate 64. Note that although the alignment jig 62 is configured including a ring shaped upper plate 72 illustrated in Fig. 6, in the laminating process the alignment jig 62 is employed in a state in which this upper plate has been removed.

As illustrated in Fig. 5, each of the circular arc-shaped iron core pieces 12 that has been pushed onto the alignment jig 62 is retained on the alignment jig 62 in a state in which the respective guide pins 68 have been inserted through its four guide holes 24. Each time one of the circular arc-shaped iron core pieces 12 is pushed onto the alignment jig 62, the alignment jig 62 is rotated 90° (the circular arc angle θ of the circular arc-shaped iron core pieces 12) in the arrow A direction in Fig. 5. One layer of the ring-shaped iron core pieces 14 is completed by repeating this 90° rotation three times. Next, the alignment jig 62 is lowered by an amount corresponding to the plate thickness of a single circular arc-shaped iron core piece 12, and the alignment jig 62 is rotated 22.5° (the phase-offset angle δ) in the arrow A direction in Fig. 5. By sequentially repeating the above processing, the plural ring-shaped iron core pieces 14 are laminated (rotationally laminated) so as to be phase-offset with respect to each other around the circumferential direction in order to manufacture the laminated iron core body 16.

Note that when the laminated iron core body 16 has been manufactured, the circumferential direction positions of the first protrusions 30A and the second protrusions 30B of the ring-shaped iron core pieces 14 are aligned with each other. Namely, the first protrusions 30A and the second protrusions 30B form rows along the lamination direction. The manufactured laminated iron core body 16 is then removed from the turntable together with the alignment jig 62, and processing transitions to the welding process.

In the welding process, the respective layers of the circular arc-shaped iron core pieces 12, which are phase-offset with respect to each other around the circumferential direction, are welded together along the lamination direction at plural circumferential direction locations at the circumferential inside of the laminated iron core body 16. First, as illustrated in Fig. 6, the upper plate 72 is attached to the alignment jig 62. The upper plate 72 is fixed to upper ends of the eight support columns 70, for example by fastening with bolts, thereby retaining the laminated iron core body 16 at a specific thickness. Alternatively, the laminated iron core body 16 may be retained at the specific thickness by a dedicated clamping device that clamps the upper plate 72 and the lower plate 64 above and below the eight support columns 70.

Next, as illustrated in Fig. 6, the alignment jig 62 is attached onto a turntable 74 that includes a fiber laser welding torch, and the welding previously described is performed using the fiber laser welding torch (note that the member allocated the reference numeral 76 in Fig. 6 is a torch serving as a processing head of the fiber laser welding torch). Note that the welding processing includes a first welding process to form the first weld portions 18A, and a second welding process to form the second weld portions 18B.

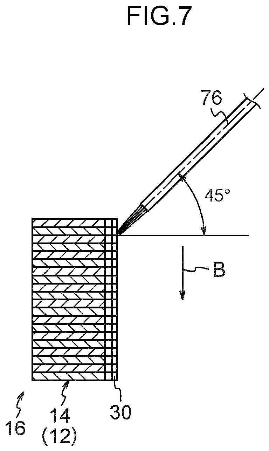

As illustrated in Fig. 7, in the first welding process, the torch 76 is tilted upward, namely toward the lamination direction outside, by 45° with respect to the laminated iron core body 16, while moving the torch 76 downward along the lamination direction (the arrow B direction) to weld the laminated ring-shaped iron core pieces 14 together. Specifically, in the first welding process, a welding laser is continuously or intermittently scanned across each of the first protrusions 30A disposed along the lamination direction on progression from the ring-shaped iron core piece 14 at the uppermost layer to the ring-shaped iron core piece 14 at the lowermost layer. The first protrusions 30A scanned by the laser melt as a result, thus forming the linear first weld portion 18A.

Next, the turntable 74 is rotated by 22.5° (the phase-offset angle δ) in the arrow A direction in Fig. 6, and the welding laser is scanned across the next first protrusions 30A in order to form the next first weld portion 18A. The above processing is sequentially repeated to form the sixteen first weld portions 18A at the circumferential inside of the laminated iron core body 16.

The second welding process is performed following the first welding process. As illustrated in Fig. 7, similarly to in the first welding process, in the second welding process the torch 76 is tilted upward, namely toward the lamination direction outside, by 45° with respect to the laminated iron core body 16, while moving the torch 76 downward along the lamination direction (the arrow B direction) in order to weld the plural layers of the laminated ring-shaped iron core pieces 14 together. Specifically, in the second welding process, the welding laser is scanned across each of the second protrusions 30B of the ring-shaped iron core pieces 14 from the lamination direction outside at an oblique angle, specifically from an oblique upward angle of 45°. When this is performed, the second protrusions 30B scanned with the laser are the second protrusions 30B disposed on the counterclockwise side of the corresponding first protrusions 30A as viewed from above.

Note that in the second welding process of the present exemplary embodiment, a direction of heat input matches the laser beam direction, and is tilted at an oblique angle with respect to the lamination direction. Although the direction of the torch 76 with respect to the laminated iron core body 16 matches the beam direction of the laser, namely the direction of heat input, in Fig. 7, there is no limitation thereto. As long as the laser is scanned while tilted to an oblique angle with respect to the lamination direction, the torch 76 itself does not need to be tilted to an oblique angle with respect to the lamination direction.

The torch 76 is then moved downward along the lamination direction (arrow B direction) by several millimeters. Namely, the welding laser is continuously or intermittently scanned across an upper end side portion of the second protrusions 30B disposed running along the lamination direction, from the ring-shaped iron core piece 14 at the uppermost layer toward the ring-shaped iron core piece 14 at the lowermost layer. The second protrusions 30B scanned by the laser melt as a result, thus forming the linear second weld portion 18B. Note that in the second welding process, the welding heat input amount is reduced as the torch 76 moves from the lamination direction outside toward the lamination direction inside. Thus, as illustrated in Fig. 4B, the second weld portion 18B tapers on progression toward the lower side end portion 19C at the lamination direction inside.

Next, the turntable 74 is rotated by 22.5° (the phase-offset angle δ) in the arrow A direction in Fig. 6 and the welding laser is scanned across the next second protrusions 30B to form the next second weld portion 18B. The above processing is sequentially repeated to form the sixteen second weld portions 18B at the circumferential inside of the upper portion of the laminated iron core body 16.

An operator then separates the upper plate 72 and the lower plate 64, removes the laminated iron core body 16 from the alignment jig 62, turns the laminated iron core body 16 upside-down, then fixes the laminated iron core body 16 to the alignment jig 62 once again. The second welding process is then repeated after the upper plate 72 has been reattached to the alignment jig 62. Namely, the sixteen second weld portions 18B are formed at the circumferential inside of the upper portion (which was the lower portion during the first round of the second welding process) of the laminated iron core body 16 (see Fig. 1).

By performing the first welding process and the second welding process, the first weld portions 18A and the second weld portion 18B are formed, thus completing the laminated iron core 10. The completed laminated iron core then undergoes a specific inspection in the next process, this being the inspection process.

### Operation and Advantageous Effects

Next, explanation follows regarding operation and advantageous effects of the present exemplary embodiment.

In the laminated iron core 10 of the present exemplary embodiment, after performing the laminating process, the ring-shaped iron core pieces 14 are joined together in the lamination direction in the first welding process and the second welding process. Note that the first weld portions 18A formed in the first welding process are linear weld portions provided along the lamination direction of the laminated iron core body 16. The first weld portions 18A join the ring-shaped iron core pieces 14 of the respective layers into an integral unit. The second weld portions 18B formed in the second welding process are provided at some of the ring-shaped iron core pieces 14, including the ring-shaped iron core piece 14 at the corresponding outermost layer, and are linear weld portions that extend toward the lamination direction inside. The second weld portions 18B join together the ring-shaped iron core pieces 14 in some of the layers, including the ring-shaped iron core piece 14 at the corresponding outermost layer.

Note that the ring-shaped iron core piece 14 of any given intermediate layer is welded to the ring-shaped iron core pieces 14 of the two adjacent layers, whereas the ring-shaped iron core pieces 14 of the outermost layers are only welded to the ring-shaped iron core piece 14 of the adjacent layer on one side thereof. Thus, were the laminated iron core body 16 to be formed with only the first weld portions 18A, and the laminated iron core 10 configured from this laminated iron core body 16 then to be used in a motor rotor, the following defect may arise. Namely, depending on the usage environment, the ring-shaped iron core pieces 14 of the outermost layers may shift or detach from the laminated iron core body 16. To address this, the second weld portions 18B of the present exemplary embodiment enable the join strength to be enhanced at the ring-shaped iron core pieces 14 of the respective outermost layers of the laminated iron core body 16.

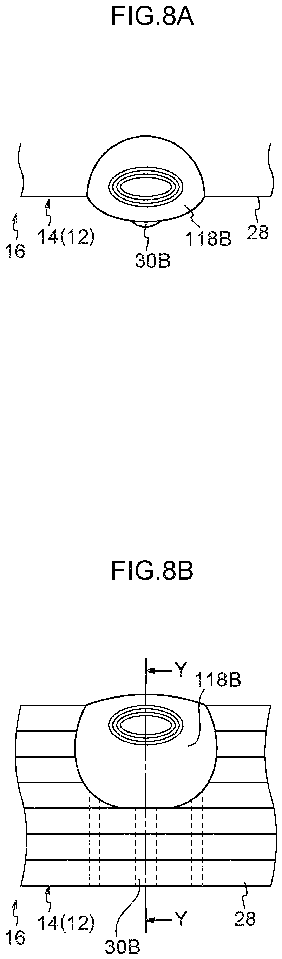

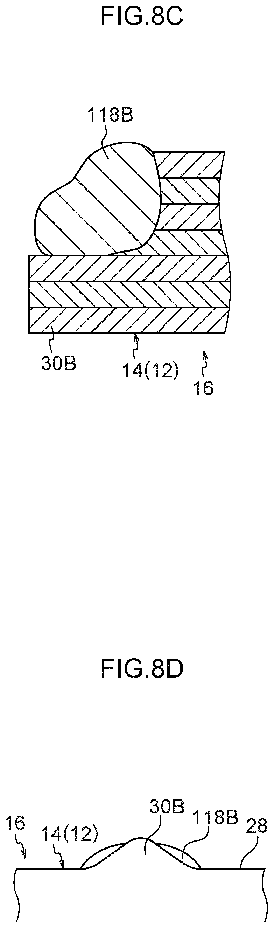

Moreover, laser welding is performed from the lamination direction outside toward the lamination direction inside in the second welding process, such that the second weld portions 18B extend from the ring-shaped iron core pieces 14 of the respective outermost layers toward the lamination direction inside. Fig. 8A to Fig. 8D illustrate a comparative example in which a second weld portion 118B has been laser spot welded by shining a laser at a single location. As illustrated in Fig. 8B and Fig. 8C, the second weld portion 118B of the comparative example projects out beyond the upper face of the laminated iron core body 16. In contrast thereto, in the present exemplary embodiment, the second weld portion 18B is formed from the lamination direction outside toward the lamination direction inside. Thus, as illustrated in Fig. 4B and Fig. 4C, the second weld portion 18B is suppressed from projecting out beyond the upper face of the laminated iron core body 16. The present exemplary embodiment is therefore capable of enhancing the join strength of the ring-shaped iron core pieces 14 of the respective outermost layers, and of suppressing shifting or detachment of the ring-shaped iron core pieces 14, without causing the weld portions to project out beyond the upper face of the laminated iron core body 16.

Moreover, in the second welding process, each of the second weld portions 18B is formed by reducing the welding heat input amount as the torch 76 is moved downward toward the lamination direction inside. Note that if the welding heat input amount were not changed as the torch 76 moves, a molten portion would remain at a lower side end portion of the second weld portion 18B, which would be liable to project out toward the circumferential inside of the laminated iron core body 16. In the present exemplary embodiment, reducing the welding heat input amount as the torch 76 is moved downward causes the second weld portion 18B to taper on progression toward the lower side end portion 19C at the lamination direction inside, as illustrated in Fig. 4B. As illustrated in Fig. 3A, the radial direction inside end portion 19B of the second weld portion 18B formed in this manner does not project out toward the circumferential inside of the laminated iron core body 16. Furthermore, the radial direction inside end portion 19B of the second weld portion 18B does not project out beyond the circle S inscribed at the inner circumferential face 32 of the laminated iron core body 16.

In the present exemplary embodiment, the second weld portions 18B, these being additional weld portions, do not project out beyond either the upper face or lower face, these being lamination direction outside faces, of the laminated iron core body 16, and do not project out beyond the circle S inscribed at the inner circumferential face 32 of the laminated iron core body 16, thereby obtaining the following advantageous effects. Namely, the present exemplary embodiment is capable of enhancing the join strength of the ring-shaped iron core pieces 14 at the respective outermost layers, while suppressing any reduction in assembly precision when assembling the laminated iron core 10 configured from the laminated iron core body 16 to a rotor shaft or the like.

Furthermore, in the second welding process of the present exemplary embodiment the welding laser is scanned at an oblique upward tilt of 45° with respect to the laminated iron core body 16 along a direction of progress from the lamination direction outside. Directing the direction of heat input along the welding direction enables the next location to be welded to be preheated, thus enabling a wider weld bead and enhanced weld strength. Furthermore, as illustrated in Fig. 4B, in cases in which the welding direction coincides with the direction of gravity, molten material flows along the welding direction, resulting in a desirable duration between melting and solidification, and thus imparting the weld bead with a smooth surface.

In the welding process of the present exemplary embodiment, the second weld portions 18B can be provided at both lamination direction sides by forming the second weld portions 18B from one welding direction outside, inverting the laminated iron core body 16, and then forming the second weld portions 18B from the other welding direction outside. This enables the join strength of the ring-shaped iron core pieces 14 of the respective outermost layers to be enhanced, enabling the ring-shaped iron core pieces 14 to be suppressed from shifting or detaching.

### Supplementary Explanation of Exemplary Embodiment

Although the laminated iron core body 16 is fixed to the alignment jig 62 and laser welding is performed with the lamination direction aligned with the up-down direction (direction of gravity) as illustrated in Fig. 6 in the present exemplary embodiment, there is no limitation thereto. The lamination direction may be set and welding performed in a horizontal direction or an oblique direction.

Although laser welding is employed as the method of joining the plural layers of ring-shaped iron core pieces 14 in the present exemplary embodiment, there is no limitation thereto, and another method may be employed. For example, a method other than laser welding, such as electron beam welding, light beam welding, or arc welding, may be employed. Note that in cases in which a welding method such as electron beam welding or light beam welding is employed, the torch corresponds to a processing head, and the direction of heat input matches the beam direction. Note that in cases in which a welding method such as arc welding is employed, the electrode rod corresponds to a processing head and the direction of heat input matches the arc electrical discharge direction.

Although sixteen of the second weld portions 18B are formed after forming the sixteen first weld portions 18A in the present exemplary embodiment, there is no limitation thereto. The first weld portions 18A and the second weld portions 18B may be alternately formed at an upper portion of the laminated iron core body 16.

Although the second weld portions 18B are provided counterclockwise of the respective first weld portions 18A at the upper portion of the laminated iron core body 16 in plan view, and provided clockwise of the respective first weld portions 18A at the lower portion of the laminated iron core body 16 in plan view in the present exemplary embodiment, there is no limitation thereto. For example, the second weld portions 18B may be provided clockwise of the respective first weld portions 18A at the upper portion of the laminated iron core body 16 in plan view, and provided counterclockwise of the respective first weld portions 18A at the lower portion of the laminated iron core body 16 in plan view. Alternatively, for example, the second weld portions 18B may be provided in the same direction relative to the respective first weld portions 18A at both the upper portion and the lower portion of the laminated iron core body 16 in plan view. Alternatively, the second weld portions 18B may be provided at both sides of the respective first weld portions 18A at both the upper portion and the lower portion of the laminated iron core body 16 in plan view, namely at thirty-two locations respectively in the present exemplary embodiment. Note that in consideration of the welding process, the welding process can be simplified by forming the second weld portions 18B at uniform angular intervals around the circumferential direction.

Moreover, in the present exemplary embodiment, forming both the first weld portions 18A and the second weld portions 18B at uniform angular intervals around the circumferential direction enables the laminated iron core 10 to be provided with a good rotational balance.

Regarding the weld positions of the respective circular arc-shaped iron core pieces 12, the second weld portions 18B should be formed toward the sides of the joints 26 (see Fig. 1), namely toward the circumferential direction outer sides of the iron core piece 12. Providing the second weld portions 18B as far toward these outer sides as possible enables enhanced join strength with respect to centrifugal force that acts on the laminated iron core 10.

Although three meltable protrusions 30 (the first protrusion 30A and the second protrusions 30B) are provided for each single groove 28 in the present exemplary embodiment, there is no limitation thereto. A groove may be provided for each first protrusion 30A and for each second protrusion 30B. In such cases, if there is only a short distance between the first protrusion 30A and the respective second protrusions 30B, projecting locations between neighboring grooves may deform or the like during welding, which may create weak points. Thus, in cases in which there is only a short distance between the first protrusion 30A and the respective second protrusions 30B, the first protrusion 30A and the second protrusions 30B are preferably formed projecting out from a single groove 28 as in the present exemplary embodiment.

Although the laminated iron core body 16 is configured with sixteen poles in the present exemplary embodiment, the present invention is not limited thereto, and the number of magnetic poles in the laminated iron core body 16 may be modified as appropriate.

Although the present exemplary embodiment is applied with a configuration in which the number of weld portions 18 provided is the same as the number of the magnetic poles of the laminated iron core body 16, there is no limitation thereto, and the number of weld portions 18 may be modified as appropriate. For example, a configuration may be applied in which the number of weld portions provided is half the number of the magnetic poles of the laminated iron core body 16.

Although the present exemplary embodiment is applied with a configuration in which the weld portions 18 and the magnet mounting portions 20 are provided on opposite sides of the guide holes 24 to each other, there is no limitation thereto. A configuration may be applied in which the weld portions and the guide holes are provided offset with respect to each other around the circumferential direction of the circular arc-shaped iron core pieces.

Although the present exemplary embodiment is applied with a configuration in which the weld portions 18 are provided at the circumferential inside of the laminated iron core body 16, there is no limitation thereto. The weld portions may be provided at the circumferential outside of the laminated iron core body. In such cases, the weld portions including the first weld portions and the second weld portions are formed such that radial direction outside end portions thereof do not project out beyond a circumscribed circle at an outer circumferential face of the laminated iron core body.

Various other modifications may be implemented within a range not departing from the spirit of the present invention. Obviously, the scope of rights encompassed by the present invention is not limited to the above exemplary embodiment.

The entire content of the disclosure of Japanese Patent Application No. 2018-248037 filed on December 28, 2018 is incorporated by reference in the present specification. All cited documents, patent applications, and technical standards mentioned in the present specification are incorporated by reference in the present specification to the same extent as if the individual cited document, patent application, or technical standard was specifically and individually indicated to be incorporated by reference.

## Claims

1. A laminated iron core comprising:
a ring-shaped iron core piece configured by arranging magnetic circular arc-shaped iron core pieces in a ring shape;
a laminated iron core body formed by laminating a plurality of ring-shaped iron core pieces;
a first weld portion provided at the laminated iron core body so as to run along a lamination direction of the ring-shaped iron core pieces; and
a second weld portion provided at some of the plurality of ring-shaped iron core pieces, including a ring-shaped iron core piece at an outermost layer, the second weld portion extending toward a lamination direction inside.

2. The laminated iron core of claim 1, wherein the second weld portion tapers on progression toward a lamination direction inside end portion of the second weld portion.

3. The laminated iron core of claim 1 or claim 2, wherein a lamination direction outside end portion of the second weld portion is positioned either at a same position as a lamination direction outside end face of the laminated iron core body, or at the lamination direction inside of the end face.

4. The laminated iron core of any one of claim 1 to claim 3, wherein
an end portion of the second weld portion in a radial direction of the laminated iron core body is positioned either at a same position as a circle contacting a circumferential face on a side of the laminated iron core body where the second weld portion is provided, or further within the laminated iron core body than the circle.

5. A laminated iron core manufacturing method comprising:
a lamination process of laminating a plurality of ring-shaped iron core pieces to form a laminated iron core body while arranging magnetic circular arc-shaped iron core pieces in a ring shape to form the ring-shaped iron core pieces;
a first welding process of welding the laminated iron core body along a lamination direction of the ring-shaped iron core pieces; and
a second welding process of welding some of the ring-shaped iron core pieces, including a ring-shaped iron core piece at an outermost layer, from a lamination direction outside toward a lamination direction inside.

6. The laminated iron core manufacturing method of claim 5, wherein, in the second welding process, a welding heat input amount is reduced on progression toward the lamination direction inside.

7. The laminated iron core manufacturing method of claim 5 or claim 6, wherein, in the second welding process, a direction of heat input to the laminated iron core body is tilted at an oblique angle relative to the lamination direction.

8. The laminated iron core manufacturing method of any one of claim 5 to claim 7, wherein:
the second welding process is performed on the ring-shaped iron core piece at the outermost layer on one out of two lamination direction sides; and
the laminated iron core body is then inverted in the lamination direction, after which the second welding process is performed on the ring-shaped iron core piece at the outermost layer on the other out of the two lamination direction sides.
